Europäisches Patentamt

European Patent Office

Office européen des brevets

(11) Veröffentlichungsnummer: **0 046 443**
**B1**

(12) **EUROPÄISCHE PATENTSCHRIFT**

(45) Veröffentlichungstag der Patentschrift:
03.07.85

(21) Anmeldenummer: 81810312.9

(22) Anmeldetag: 03.08.81

(51) Int. Cl.⁴: **G 02 B 17/08**

(54) **Katadioptrisches Objektiv hoher Öffnung.**

(30) Priorität: **16.08.80 CH 6155/80**

(43) Veröffentlichungstag der Anmeldung:
**24.02.82 Patentblatt 82/8**

(45) Bekanntmachung des Hinweises auf die Patenterteilung:
**03.07.85 Patentblatt 85/27**

(84) Benannte Vertragsstaaten:
**AT DE FR GB IT NL SE**

(56) Entgegenhaltungen:
**EP - A - 0 002 647**
**DE - B - 1 274 812**
**DE - B - 1 547 130**
**DE - C - 2 222 864**
**US - A - 3 632 190**
**US - A - 3 711 184**
**US - A - 4 165 151**

(73) Patentinhaber: **Canzek, Ludvik, Dr., Quellmattstrasse 3,
CH-5035 Unterentfelden (CH)**

(72) Erfinder: **Canzek, Ludvik, Dr., Quellmattstrasse 3,
CH-5035 Unterentfelden (CH)**

(74) Vertreter: **Seifert, Helmut E., RITSCHER & SEIFERT
Patentanwälte Auf der Mauer 4, CH-8001 Zürich (CH)**

## Beschreibung

Die Erfindung betrifft ein katadioptrisches Objektiv hoher Öffnung, das im Frontteil nur eine Einzellinse, deren Brennweite f(1,2) der Beziehung

$$f(1,2) \geq 1,8\, f \qquad (f = \text{Objektivbrennweite})$$

genügt, hat und eine Hauptspiegellinse, einen Gegenspiegel sowie ein sammelndes Feldlinsensystem umfasst, wobei der mittlere Teil der Hauptspiegellinse nicht verspiegelt ist und bei dem das Feldlinsensystem aus dem dioptrisch wirkenden Teil der Hauptspiegellinse und einem in dessen unmittelbarer Nähe objektseitig angebrachten positiven Linsenteil gebildet wird.

Katadioptrische Objektive mit sphärischen Flächen, welche hohe Öffnung aufweisen, sind bekannt. Sie werden meistens als abgewandelte Objektive vom Mandler-Typ mit zwei oder mehr Linsen im Frontteil, einer Cassagrain'schen Spiegelanordnung und einem Feldlinsensystem gebaut. Ein solches Objektiv ist in Havlicek-Canzek: «Zum Korrigieren von Spiegelobjektiven», Deutsche Geodätische Kommission bei der Bayerischen Akademie der Wissenschaften, Reihe A, Heft 42, München 1963, beschrieben. Ein weiteres Beispiel mit dem Öffnungsverhältnis von 1 : 1,2 ist in der DE-Patentschrift 2 222 864 angegeben. Sehr nachteilig für diesen Objektivtyp ist der grosse Zonenfehler der sphärischen Aberration.

Ein Spiegelobjektivtyp für grosse Lichtstärke mit weitgehend korrigiertem Zonenfehler der sphärischen Aberration ist in der CH-Patentschrift 542 454 sowie in Canzek: «Lichtstarkes katadioptrisches Objektiv», Optica Acta, Nr. 12, 1971 und in Nr. 4, 1972 beschrieben. Es besteht aus nur einer Frontlinse, deren verspiegelter mittlerer Teil als Gegenspiegel wirkt, einer durchbohrten Hauptspiegellinse und einem Feldlinsensystem. Der Objektivbrennpunkt befindet sich im Objektivinneren, weshalb das Objektiv nicht allgemein verwendbar ist.

Schliesslich sind vier Objektive dieser Art mit dem Öffnungsverhältnis 1 : 1,2 aber mit dem Brennpunkt ausserhalb des Objektivs in Canzek: «Neue Richtung in der Entwicklung der katadioptrischen Objektive», Optica Acta, Nr. 2, 1979 und in der europäischen Patentschrift Nr. 2 647 beschrieben. Sie stellen den neuesten Stand der Technik dar. Die ersten zwei Ausführungsbeispiele der genannten Patentschrift sind am einfachsten gebaut. Sie bestehen aus einer Front- und einer Hauptspiegellinse. Eine auf den mittleren Teil der Frontlinse aufgedampfte Spiegelschicht dient als Gegenspiegel, und der mittlere nicht ausgebohrte und nicht verspiegelte Teil der Hauptspiegellinse, der dioptrisch wirkt, trägt objektseitig eine oder zwei Feldlinsen. Die grossen Nachteile dieser Objektive sind in dem, dass für die grossen optischen Elemente, d. h. für die Front- und Hauptspiegellinse hochbrechende Gläser SF3, bzw. SF55 und LaF23 verwendet werden müssen und dass die Front- und Hauptspiegellinse aus verschiedenen Glasarten gefertigt sind. Bekanntlich sind hochbrechende Gläser für die Korrektur der Abbildungsfehler sehr vorteilhaft. Die Nachteile der meisten solchen Gläser sind aber starke Empfindlichkeit auf chemische Einflüsse, hohes spezifisches Gewicht und hoher Preis. Die Herstellung von Linsen aus solchem Glas ist schwierig und teuer. Jene hochbrechenden Gläser, bei welchen diese negativen Eigenschaften weniger ausgeprägt sind, haben aber im kurzwelligen Bereich des sichtbaren Spektrums eine niedrigere Durchlässigkeit. Dieser Bereich ist aber bei den Anwendungen in der Optoelektronik, Fotografie und bei den visuellen Geräten oft von Bedeutung.

In der oben erwähnten Patentschrift sind bei zwei weiteren Beispielen für die Front- und Hauptspiegellinse günstigere Gläser vorgesehen. Die Objektive sind aber aufwendiger konstruiert, denn sie haben eine mittelgrosse Linse mehr, welche beim Gegenspiegel angeordnet ist. Die grossen optischen Elemente sind aber immer noch aus verschiedenen Gläsern gefertigt. Der Vorteil der günstigeren Gläser wird bei diesen Objektiven durch eine kompliziertere und teurere Konstruktion aufgehoben.

Im weiteren sind auch optische Systeme bekannt, bei welchen das Feldlinsensystem aus dem mittleren Teil der Hauptspiegellinse und in deren unmittelbarer Nähe objekt- und bildseitig stehenden Linsen gebildet wird. Die Wirkung des Feldlinsensystems und des Teilsystems vor der Hauptspiegellinse ist in diesen Beispielen zerstreuend, das Teilsystem dahinter sammelnd. Diese Objektive haben aber ein sehr niedriges Öffnungsverhältnis und sind ziemlich aufwendig gebaut. Die Objektive nach der USA Patentschrift 3 490 831 mit dem Öffnungsverhältnis von 1 : 10 haben eine zweikomponentige Frontlinse und eine mittelgrosse Linse in der Gegend des Gegenspiegels.

Soll das Objektiv nicht nur die Bildmitte, sondern auch ein grösseres Bildfeld scharf abbilden, dann muss es mit einem Feldlinsensystem versehen sein. Untersuchungen haben gezeigt, dass die Objektive dieser Art ein anastigmatisches und ebenes Bildfeld ermöglichen, wenn das Feldlinsensystem sammelnd ist, somit genau die entgegengesetzte Wirkung hat wie das Feldlinsensystem in der US-PS 4 165 151. Das Objektiv nach dieser US-PS hat ein Öffnungsverhältnis von nur 1 : 7. Es ist aber auch aufwendig gebaut, denn es hat im Bereich des Gegenspiegels eine Linse und einen spiegeltragenden Glaskörper, somit zwei mittelgrosse optische Elemente.

Der Erfindung liegt die Aufgabe zugrunde, ein katadioptrisches Objektiv hoher Öffnung zu berechnen, das bei einfachem Aufbau für die Front- und Hauptspiegellinse Gläser aufweist, welche leichter, billiger und vor allem auf chemische Einflüsse weniger empfindlich sind als Gläser bei den bekannten Objektiven. Die Objektivleistungen sollen trotz diesen wesentlichen Verbesserungen nicht herabgesetzt werden, besonders soll die Abbildungsqualität nicht verschlechtert sein.

Erfindungsgemäss wird dies durch die im Anspruch 1 gekennzeichneten Massnahmen erreicht.

Untersuchungen haben gezeigt, dass nach dieser Erfindung berechnete Objektive sehr einfach gebaut werden können, dass für die Front- und Hauptspiegellinse Gläser anwendbar sind, bei welchen die oben aufgezählten nachteiligen Eigenschaften stark vermindert sind oder gar nicht mehr auftreten und dass die Objektive trotzdem bei einem hohen Öffnungsverhältnis eine ausgezeichnete Abbildungsgüte aufweisen.

Die Erfindung ermöglicht sogar für die Front- und Hauptspiegellinse ein Glas gleicher Art mit oben erwähnten günstigen Eigenschaften zu verwenden. Dadurch stellt die Erfindung sogar eine Verbesserung der Abbildungsqualität im Vergleich zu den Objektiven, die den Stand der Technik darstellen, weil das primäre und sekundäre Spektrum des Objektivs weitgehend beseitigt und dadurch die chromatische Korrektur für einen breiteren Spektralbereich erreicht werden kann, wenn im Objektiv jene Linsen, die weit vom Brennpunkt entfernt liegen aus Glas gleicher Art gebaut sind. Dies kommt in Objektiven mit langen Brennweiten, was die Spiegelobjektive meistens sind, besonders zur Geltung. Nach dieser Erfindung berechnete Objektive lassen sich chromatisch so korrigieren, dass sie für den ganzen Wellenlängenbereich von 400 nm bis 1000 nm gebraucht werden können.

Die Erfindung wird nachfolgend anhand von drei Ausführungsbeispielen und Zeichnungen näher erläutert. Es zeigen:

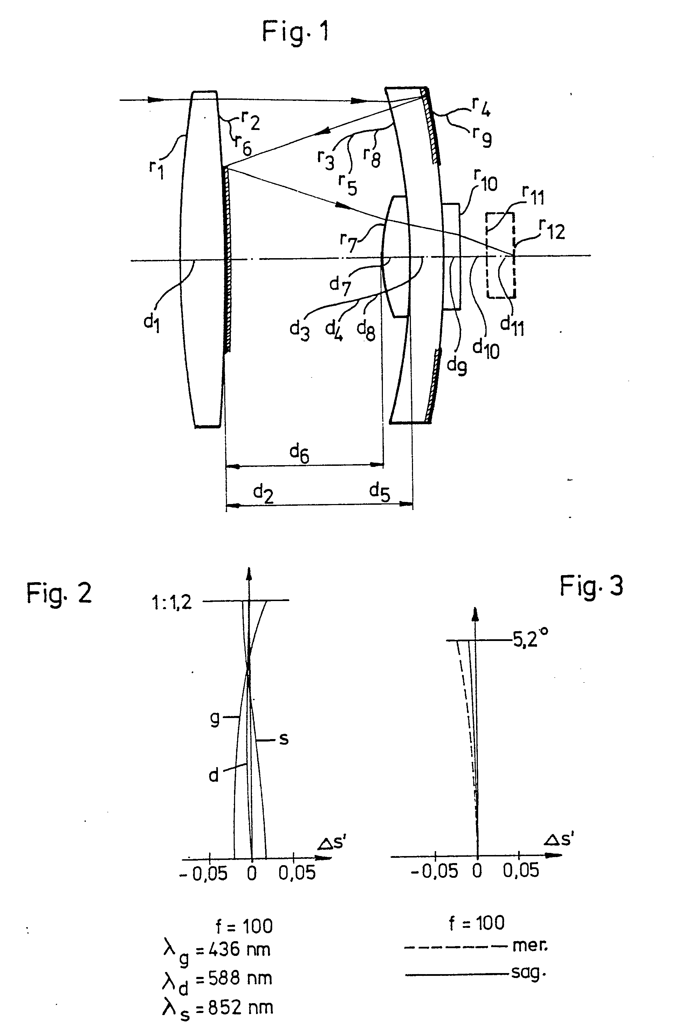

Fig. 1 ein erfindungsgemässes Objektiv in schematischer Darstellung, Fig. 2 die sphärische Aberration des Objektivs gemäss Patentanspruch 6 für die Spektrallinien d ($\lambda$ = 588 nm), g ($\lambda$ = 436 nm) und s ($\lambda$ = 852 nm) und Fig. 3 den Astigmatismus des Objektivs gemäss Patentanspruch 6.

Drei Ausführungsbeispiele nach dieser Erfindung sind in den Tabellen gemäss den Patentansprüchen 4, 5 und 6 angegeben und in der Fig. 1 schematisch dargestellt. Die Objektive bestehen aus einer Front-, einer Hauptspiegellinse, einem Gegenspiegel, der auf den zentralen Teil der Frontlinse aufgedampft ist und aus einem sammelnden Feldlinsensystem. Das Feldlinsensystem bilden der mittlere nicht verspiegelte Teil der Hauptspiegellinse und die objekt- und bildseitig benachbart angeordneten Linsen. Die Brennweite der Frontlinse ist in allen Beispielen grösser als das 1,8-fache der Brennweite des Gesamtobjektivs.

Die Linsen vor, bzw. hinter der Hauptspiegellinse können – müssen aber nicht – mit mechanischen Fassungsteilen befestigt werden; vorteilhafter bei kleinen Durchmessern ist jedoch das Kitten auf die Hauptspiegellinse, wie dies hier gezeigt wird. Die Linsen vor, bzw. hinter der Hauptspiegellinse können – müssen aber nicht – wie die Beispiele hier zeigen, aus mehreren Linsen bestehen.

Die Spiegellinsenobjektive dieser Art werden überwiegend in der Optoelektronik für Nachtsichtgeräte in Verbindung mit Bildverstärker- oder Bildwandlerröhren verwendet. Die Bildverstärkerröhre der 3. Generation unterscheidet sich von denjenigen der 1. und 2. Generation dadurch, dass die Spektralempfindlichkeit zum Infraroten verschoben ist und dass vor der Kathode statt der Fiberglassplatte ein Deckglas ist (siehe Csorba: «Recent Advancements in the Field of Image Intesification: The Generation 3 Wafer Tube», Applied Optics, Nr. 14, 1979).

Objektive nach dieser Erfindung können auch für die Anwendungen mit dem Deckglas auf dem Fachmann bekannte Art modifiziert werden, was hier mit dem Objektivbeispiel nach dem Patentanspruch 6 und in der Fig. 1 durch das gestrichelt dargestellte Glas der Dicke $d_{11}$ gezeigt wird. Ein solches Objektiv kann, wenn nötig, gleichzeitig für die Bildverstärkerröhren aller drei Generationen unverändert dienen indem man bei der Verwendung von Röhren der 1. bzw. 2. Generation das Deckglas durch eine Planplatte entsprechender Dicke ersetzt.

| Glasart (nach Schott) | LLF1 | SF3 | SF55 | LaF23 |
|---|---|---|---|---|
| Brechungsindex $n_d$ | 1.5481 | 1.74 | 1.7618 | 1.689 |
| Dichte (g/cm³) | 2.94 | 4.64 | 4.72 | 4.21 |
| Klimawechsel-Beständigkeit (Klasse) | 1 | 1 | 1 | 3 |
| Fleckenempflindlichkeit (Klasse) | 0 | 2 | 2 | 2 |
| Säurefestigkeit (Klasse) | 1 | 5a | 3 | 5b |
| Transmission für d = 25 mm und $\lambda$ = 400 nm | 0.99 | 0.86 | 0.76 | 0.90 |

In den Ausführungsbeispielen wird für die Front- und Hauptspiegellinse das Glas LLF1 verwendet, dessen wichtigste physikalische und chemische Eigenschaften in der oben angegeben Aufstellung mit denjenigen von SF3, SF55 und LaF23 verglichen werden.

Das hier angewendete Glas LLF1 kann durch ein anderes etwa gleich günstiges (z. B. K7, LF7 usw.) ersetzt werden, oder es können für die Front- und Hauptspiegellinse zwei verschiedene Gläser gewählt werden (wenn man das Objektiv in einem engeren Spektralbereich verwendet) ohne dabei den grundsätzlichen optischen Aufbau ändern zu müssen. Objektive nach dieser Erfindung können auch aus Materialien hergestellt werden. die für den Gebrauch im UV oder IR Bereich geeignet sind.

Die Anwendungsbeispiele dieser Erfindung unterscheiden sich vom Bekannten nach der Form und nach der Konstruktionsregel der sammelnden und zerstreuenden Linsen im Feldlinsensystem, welches für diesen Objektivtyp grundsätzlich neu ausgelegt wurde. Erst diese Neuerung ermöglichte die Lösung der gestellten Aufgabe.

Die optischen Berechnungen der Ausführungsbeispiele dieser Erfindung zeigen trotz dem ausserordentlich einfachen Aufbau der Objektive erstaunlich gute Resultate, so dass man das Öffnungsverhältnis über 1 : 1,2 erhöhen oder bei gleicher Lichtstärke die Brennweite vergrössern kann, ohne dabei die Abbildungsgüte wesentlich zu beeinflussen. Beides ist dank dem guten Korrektionszustand der Farbfehler, des Zonenfehlers der sphärischen Aberration und dem anastigmatisch geebneten Bildfeld möglich.

Am Ende staunt man über die Grösse des Erfolgs einer anscheinend geringfügigen Neuerung, wenn diese am richtigen Ort eines an sich bekannten Systems eingeführt wird.

## Patentansprüche

1. Katadioptrisches Objektiv hoher Öffnung, das im Frontteil nur eine Einzellinse, deren Brennweite f(1,2) der Beziehung f(1,2) $\geqq$ 1.8 f (f = Objektivbrennweite) genügt, hat und eine Hauptspiegellinse, einen Gegenspiegel sowie ein sammelndes Feldlinsensystem umfasst, wobei der mittlere Teil der Hauptspiegellinse nicht verspiegelt ist und bei dem das Feldlinsensystem (r7, r8, r9) aus dem dioptrisch wirkenden Teil der Hauptspiegellinse und einem in dessen unmittelbarer Nähe objektseitig angebrachten positiven Linsenteil gebildet wird, dadurch gekennzeichnet, dass zusätzlich mindestens eine zerstreuend wirkende Linse (r9, r10) in unmittelbarer Nähe der Hauptspiegellinse (r3, r4) bildseitig angeordnet ist.

2. Objektiv nach Patentanspruch 1, dadurch gekennzeichnet, dass die Frontlinse und Hauptspiegellinse aus Glasarten bestehen, deren Brechungsindices n für die Wellenlänge 588 nm der Beziehung n $\leqq$ 1,685 genügen.

3. Objektiv nach Patentanspruch 1, dadurch gekennzeichnet, dass es drei Glieder: Frontlinse mit Gegenspiegel, Hauptspiegellinse mit Feldlinsensystem und eine Planplatte aufweist.

4. Objektiv nach einem der Patentansprüche 1 bis 3, gekennzeichnet durch folgende Daten:

| Fläche Nr. | Radius r | Abstand d | Glasart | |
|---|---|---|---|---|
| 1 | 258.418 | 6 | LLF 1 | |
| 2 | −2818.489 | 43 | | |
| 3 | −140.076 | 8 | LLF 1 | |
| 4 | −220.868 | −8 | LLF 1 | Spiegel |
| 5 | −140.076 | −43 | | |
| 6 | −2818.489 | 38 | | Spiegel |
| 7 | 39.963 | 5 | FK 3 | |
| 8 | −140.076 | 8 | LLF 1 | |
| 9 | −220.868 | 2 | SF 57 | |
| 10 | −333.333 | | | |

Brennweite f = 99,558
Schnittweite s′ = 9,722
Öffnungsverhältnis 1 : 1,2

5. Objektiv nach einem der Patentansprüche 1 bis 3, gekennzeichnet durch folgende Daten:

| Fläche Nr. | Radius r | Abstand d | Glasart | |
|---|---|---|---|---|
| 1 | 252.742 | 6 | LLF 1 | |
| 2 | −3615.329 | 43 | | |
| 3 | −140.131 | 8 | LLF 1 | |
| 4 | −222.158 | −8 | LLF 1 | Spiegel |
| 5 | −140.131 | −43 | | |
| 6 | −3615.329 | 38 | | Spiegel |
| 7 | 40.895 | 5 | FK 3 | |
| 8 | −140.131 | 8 | LLF 1 | |
| 9 | −222.158 | 2 | F 8 | |
| 10 | −513.875 | | | |

Brennweite f = 99,834
Schnittweite s′ = 9,855
Öffnungsverhältnis 1 : 1,2

6. Objektiv nach einem der Patentansprüche 1 bis 3, gekennzeichnet durch folgende Daten:

| Fläche Nr. | Radius r | Abstand d | Glasart | |
|---|---|---|---|---|
| 1 | 251.458 | 7 | LLF 1 | |
| 2 | −16077.170 | 44 | | |
| 3 | −148.447 | 8 | LLF 1 | |
| 4 | −231.310 | −8 | LLF 1 | Spiegel |
| 5 | −148.447 | −44 | | |
| 6 | −16077.170 | 39 | | Spiegel |
| 7 | 40.614 | 5 | FK 3 | |
| 8 | −148.447 | 8 | LLF 1 | |
| 9 | −231.310 | 2 | SF 57 | |
| 10 | −310.907 | 6.025 | | |
| 11 | ∞ | 5.6 | FK 5 | |
| 12 | ∞ | | | |

Brennweite f = 99,723
Schnittweite s′ = 0
Öffnungsverhältnis 1 : 1,2

## Claims

1. Catadioptric objective of high aperture ratio, which has in the front part only a single lens, the focal length f(1,2) of which satisfies the relationship f(1,2) $\leqq$ 1.8 f (f = objective focal length), and comprises a main reflecting lens, a countermirror, and a focussing field lens system, the central zone of the main reflecting lens not being reflectively coated and wherein the field lens system (r7, r8, r9) is composed of the dioptrically acting part of the main reflecting lens and a positive lens part mounted in the immediate vicinity thereof on the object side, characterized in that, additionally, at least one diverging lens (r9, r10) is disposed in the immediate vicinity of the main reflecting lens (r3, r4) on the image side.

2. Objective according to Claim 1, characterized in that the front lens and main reflecting lens are of types of glass, the refractive indices n of which for the wavelength 588 nm satisfy the relationship n ≦ 1.685.

3. Objective according to Claim 1, characterized in that it comprises three members: Front lens with counter-mirror, main reflecting lens with field lens system and a plane plate.

4. Objective according to one of Claims 1 to 3, characterized by the following data:

| Surface No. | Radius r | Distance d | Type of glass | |
|---|---|---|---|---|
| 1 | 258.418 | 6 | LLF 1 | |
| 2 | −2818.489 | 43 | | |
| 3 | −140.076 | 8 | LLF 1 | |
| 4 | −220.868 | −8 | LLF 1 | Mirror |
| 5 | −140.076 | −43 | | |
| 6 | −2818.489 | 38 | | Mirror |
| 7 | 39.963 | 5 | FK 3 | |
| 8 | −140.076 | 8 | LLF 1 | |
| 9 | −220.868 | 2 | SF 57 | |
| 10 | −333.333 | | | |

Focal length f = 99,558
Intercept length s′ = 9,722
Aperture ratio 1 : 1,2

5. Objective according to one of Claims 1 to 3, characterized by the following data:

| Surface No. | Radius r | Distance d | Type of Glass | |
|---|---|---|---|---|
| 1 | 252.742 | 6 | LLF 1 | |
| 2 | −3615.329 | 43 | | |
| 3 | −140.131 | 8 | LLF 1 | |
| 4 | −222.158 | −8 | LLF 1 | Mirror |
| 5 | −140.131 | −43 | | |
| 6 | −3615.329 | 38 | | Mirror |
| 7 | 40.895 | 5 | FK 3 | |
| 8 | −140.131 | 8 | LLF 1 | |
| 9 | −222.158 | 2 | F 8 | |
| 10 | −513.875 | | | |

Focal length f = 99,834
Intercept length s′ 9,855
Aperture ratio 1 : 1,2

6. Objective according to one of Claims 1 to 3, characterized by the following data:

| Surface No. | Radius r | Distance d | Type of glass |
|---|---|---|---|
| 1 | 251.458 | 7 | LLF 1 |
| 2 | −16077.170 | 44 | |
| 3 | −148.447 | 8 | LLF 1 |

| Surface No. | Radius r | Distance d | Type of Glass | |
|---|---|---|---|---|
| 4 | −231.310 | −8 | LLF 1 | Mirror |
| 5 | −148.447 | −44 | | |
| 6 | −16077.170 | 39 | | Mirror |
| 7 | 40.614 | 5 | FK 3 | |
| 8 | −148.447 | 8 | LLF 1 | |
| 9 | −231.310 | 2 | SF 57 | |
| 10 | −310.907 | 6.025 | | |
| 11 | ∞ | 5.6 | FK 5 | |
| 12 | ∞ | | | |

Focal length f = 99,723
Intercept length s′ = 0
Aperture ratio 1 : 1,2

## Revendications

1. Objectif catadioptrique à grande ouverture, n'ayant dans sa partie frontale qu'une seule lentille, dont la distance focale f(1,2) satisfait à la relation f(1,2) ≧ 1,8 f (f = distance focale de l'objectif), et comprenant un système catadioptrique principal, un miroir de renvoi ainsi qu'un système le lentilles de champ convergent, dans lequel la partie centrale du système catadioptrique principal n'est pas métallisée et dans lequel le système de lentilles de champ (r7, r8, r9) est formé de la partie dioptrique du système catadioptrique principal et d'une partie de lentille convergente installée à proximité immédiate de ce dernier du côté objet, caractérisé par le fait que, en supplément, au moins une lentille divergente (r9, r10) est disposée à proximité immédiate du système catadioptrique principal du côté image.

2. Objectif conforme à la revendication 1, caractérisé par le fait que la lentille frontale et le système catadioptrique principal sont composés d'un type de verre dont l'indice de réfraction, pour la longueur d'onde 588 nm, satisfait à la relation n ≦ 1,685.

3. Objectif conforme à la revendication 1, caractérisé par le fait qu'il présente trois éléments: lentille frontale et miroir de renvoi, système catadioptrique principal et système de lentilles de champ, et une plaque plane.

4. Objectif conforme à l'une des revendications 1 à 3, caractérisé par les données suivantes:

| Surface n° | rayon | distance | type de verre |
|---|---|---|---|
| 1 | 258.418 | 6 | LLF 1 |
| 2 | −2818.489 | 43 | |
| 3 | −140.076 | 8 | LLF 1 |

| Surface n° | rayon | distance | type de verre | |
|---|---|---|---|---|
| 4 | −220.868 | −8 | LLF 1 | miroir |
| 5 | −140.076 | −43 | | |
| 6 | −2818.489 | 38 | | miroir |
| 7 | 39.963 | 5 | FK 3 | |
| 8 | −140.076 | 8 | LLF 1 | |
| 9 | −220.868 | 2 | SF 57 | |
| 10 | −333.333 | | | |

Distance focale f = 99,558
Distance de l'image au sommet de la lentille
s′ = 9,722
Rapport d'ouverture 1 : 1,2


5. Objectif conforme à l'une des revendications 1 à 3, caractérisé par les données suivantes:

| Surface n° | rayon | distance | type de verre | |
|---|---|---|---|---|
| 1 | 252.742 | 6 | LLF 1 | |
| 2 | −3615.329 | 43 | | |
| 3 | −140.131 | 8 | LLF 1 | |
| 4 | −222.158 | −8 | LLF 1 | miroir |
| 5 | −140.131 | −43 | | |
| 6 | −3615.329 | 38 | | miroir |
| 7 | 40.895 | 5 | FK 3 | |

| Surface n° | rayon | distance | type de verre | |
|---|---|---|---|---|
| 8 | −140.131 | 8 | LLF 1 | |
| 9 | −222.158 | 2 | F 8 | |
| 10 | −513.875 | | | |

Distance focale f = 99,834
Distance de l'image au sommet de la lentille
s′ = 9,855
Rapport d'ouverture 1 : 1,2


6. Objectif conforme à l'une des revendications 1 à 3, caractérisé par les données suivantes:

| Surface n° | rayon | distance | type de verre | |
|---|---|---|---|---|
| 1 | 251.458 | 7 | LLF 1 | |
| 2 | −16077.170 | 44 | | |
| 3 | −148.447 | 8 | LLF 1 | |
| 4 | −231.310 | −8 | LLF 1 | miroir |
| 5 | −148.447 | −44 | | |
| 6 | −16077.170 | 39 | | miroir |
| 7 | 40.614 | 5 | FK 3 | |
| 8 | −148.447 | 8 | LLF 1 | |
| 9 | −231.310 | 2 | SF 57 | |
| 10 | −310.907 | 6.025 | | |
| 11 | ∞ | 5.6 | FK 5 | |
| 12 | ∞ | | | |

Distance focale f = 99,723
Distance de l'image au sommet de la lentille
s′ = 0
Rapport d'ouverture 1 : 1,2

# Fig. 1

# Fig. 2

# Fig. 3

$$f = 100$$
$$\lambda_g = 436 \text{ nm}$$
$$\lambda_d = 588 \text{ nm}$$
$$\lambda_s = 852 \text{ nm}$$

$$f = 100$$

— — — — — — mer.

————————— sag.